(19) Europäisches Patentamt
European Patent Office
Office européen des brevets

(11) **EP 4 742 552 A2**

(12) **EUROPEAN PATENT APPLICATION**

(43) Date of publication:
**13.05.2026 Bulletin 2026/20**

(21) Application number: **25209185.5**

(22) Date of filing: **16.10.2025**

(51) International Patent Classification (IPC):
**H04B 7/06** (2006.01)    **H04W 4/40** (2018.01)
**H04B 7/08** (2006.01)

(52) Cooperative Patent Classification (CPC):
**H04B 7/0608; H04B 7/0695; H04B 7/088;**
**H04W 4/40;** H01Q 1/32

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **18.10.2024 US 202463709367 P**

(71) Applicant: **Harman Becker Automotive Systems,**
**Inc.**
**Novi, MI 48377 (US)**

(72) Inventors:
• **Khan, Nasserullah**
**Novi, 48377 (US)**
• **Dey, Sumit**
**Ann Arbor, 48103 (US)**
• **Sehra, Suman A.**
**Folsom, 95630 (US)**
• **Lee, Yun Ho**
**Pleasanton, 94566 (US)**
• **Liu, Hao**
**Fremont, 94539 (US)**

(74) Representative: **Kraus & Lederer PartGmbB**
**Thomas-Wimmer-Ring 15**
**80539 München (DE)**

(54) **SYSTEMS AND METHODS FOR ANTENNA SWITCHING FOR A VEHICLE**

(57) Embodiments are disclosed for an example telematics system for a vehicle. The example telematics system comprises a plurality of antennas capable of sending and receiving wireless signals and a telematics unit configured to select an antenna from the plurality of antennas based on network information and dynamic vehicle information and connect the selected antenna to the telematics unit to send and/or receive wireless signals via the selected antenna.

FIG. 6

**Description**

FIELD

The disclosure relates to the field of vehicle communication systems, and in particular to antenna systems for a vehicle.

BACKGROUND

A telematic control unit (TCU) or telematics unit is a system in a vehicle that can wirelessly connect the vehicle to various network services over various types of networks, such as cellular, Wi-Fi, Bluetooth, etc. Such systems can also control wireless tracking, diagnostics, and communication to and from the vehicle, for example. In some examples, a TCU may collect telemetry data from the vehicle, such as position, speed, engine data, connectivity quality, etc., from various sub-systems over data and control busses. Such TCU systems may use antennas connected to the TCU to collect and communicate signal data.

SUMMARY

Embodiments are disclosed for an example telematics system for a vehicle. The example telematics system comprises a plurality of antennas capable of sending and receiving wireless signals and a telematics unit configured to select an antenna from the plurality of antennas based on network information and dynamic vehicle information and connect the selected antenna to the telematics unit to send and/or receive wireless signals via the selected antenna.
Methods for a vehicle telematics system are also disclosed. An example method for a telematics system for a vehicle comprises obtaining network information and dynamic vehicle information relating to a current and/or predicted signal quality of wireless signals sent from and/or received at the vehicle; determining a shape of a radiation pattern for a plurality of antennas of the vehicle based on the network information and the dynamic vehicle information; and shaping the radiation pattern of the plurality of antennas according to the determined shape.

BRIEF DESCRIPTION OF THE DRAWINGS

The disclosure may be better understood from reading the following description of non-limiting embodiments, with reference to the attached drawings, wherein below:

> FIG. 1 shows a schematic depicting an example inter-vehicle communications system in accordance with one or more embodiments of the present disclosure;
> FIG. 2 shows an example partial view of a vehicle cabin in accordance with one or more embodiments of the present disclosure;
> FIG. 3 shows an example in-vehicle computing system in accordance with one or more embodiments of the present disclosure;
> FIGS. 4 and 5 are block diagrams depicting example antenna control systems; and
> FIGS. 6 and 7 are block diagrams illustrating example processes for antenna selection and/or control.

DETAILED DESCRIPTION

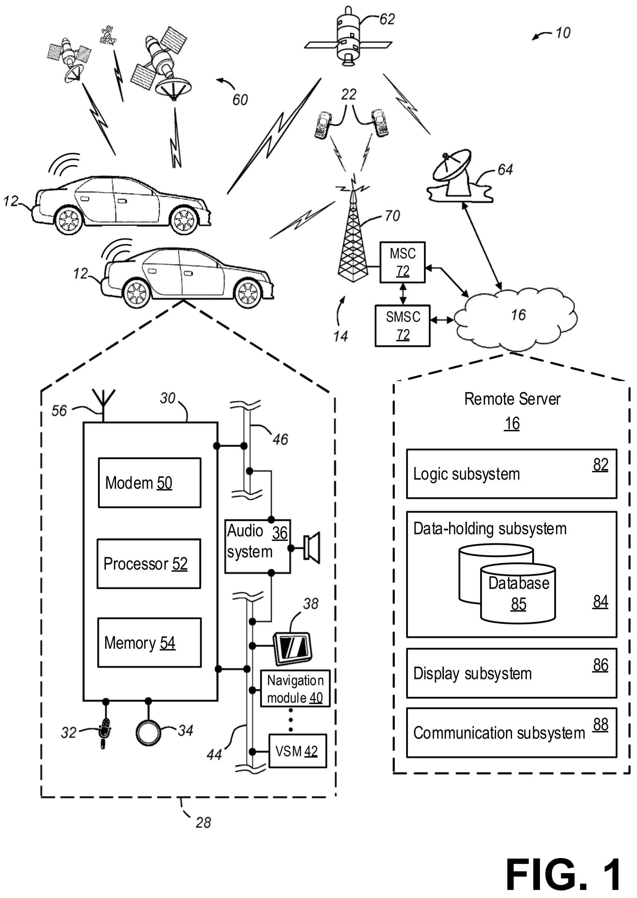

As described above, telematics systems are used to provide telecommunications and cellular connectivity for vehicles. The present disclosure describes a telematics system for a vehicle that establishes communication between the vehicle and other vehicles in the same or similar geographic area or external services via a relay tower or base station. A communications system, such as the system depicted in FIG. 1, shows one such example of a system capable of providing communication between a vehicle and external services. Further, as described herein, the telematics unit may be connectable to a plurality of antennas.
There are situations in automotive radio applications where it may be desirable or required to modify the antenna radiation pattern to suit a specific location of the automobile to maintain an optimal quality of service parameters. One example of this is urban canyons where it may be desirable to focus the antenna radiation pattern for the global navigation satellite system (GNSS) antenna along the canyon instead of in an omni-directional pattern. This will increase the visible satellites close to the horizon and avoid the issues with multi-path with satellite signals reflected from nearby tall buildings.
There are also other situations where it is beneficial to focus the cellular antenna radiation pattern towards the serving cell, especially in 5G where beamforming from the mobile side is allowed by the network. The same concept also applies to non-terrestrial networks (NTNs) and Satcom networks where beamforming is utilized.

Depending on where the antenna is placed in the vehicle, the radiation pattern varies considerably. Having multiple antennas at different locations in the vehicle and using software to switch different antennas to the telematics control unit (TCU) will help in situations where the antenna radiation pattern needs to be adapted as per the location of the vehicle with respect to the base station or satellites to improve signal reception resulting in better antenna performance. Reshaping of the antenna radiation pattern as discussed above can be done with a phased array antenna (PSA), but PSAs are narrow band and cannot cover the entire range of frequencies of interest for automotive TCUs.

Thus, according to embodiments disclosed herein, multiple antennas may be included in a vehicle which have radiation patterns optimized for different fixed directions. The antennas may be switched as needed to the TCU using a smart antenna manager. The smart antenna manager may select the appropriate antenna for the current vehicle location/situation of the vehicle as determined based on various vehicle information (e.g., camera data, GNSS location data, serving cell ID/physical location). The smart antenna manager may include an artificial intelligence/machine learning based model (such as a neural network) to select the appropriate antenna based on the vehicle information, in some examples. This allows the antenna radiation pattern to be shaped to suit the situation that the vehicle finds itself in. Further, in some examples, the antennas may be phased-array antennas and the smart antenna manager may be configured to control a phase and gain of the RF signal output by each antenna/element to shape the antenna radiation pattern based on the vehicle situation.

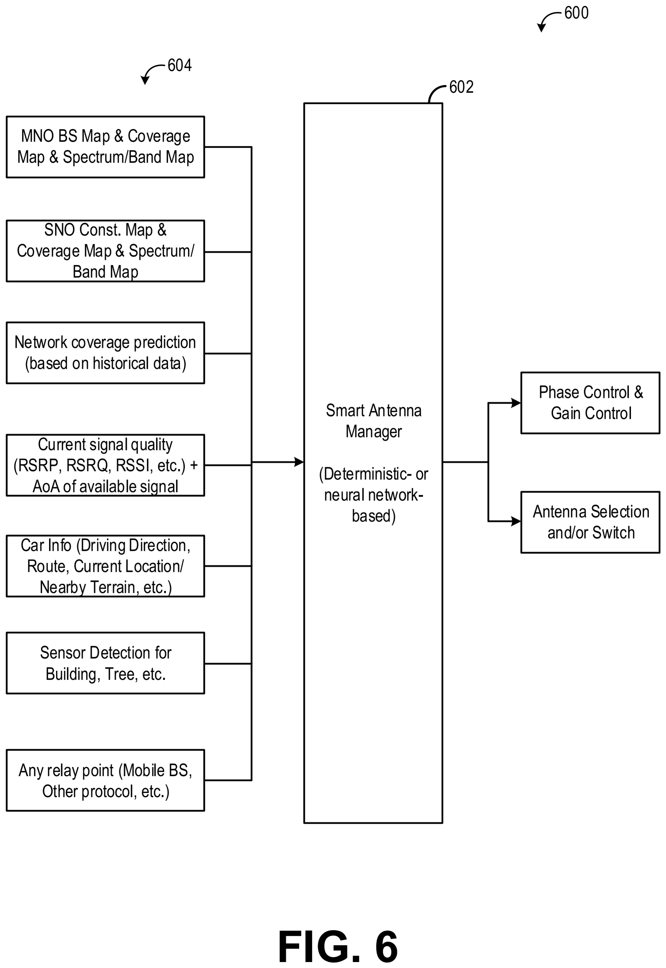

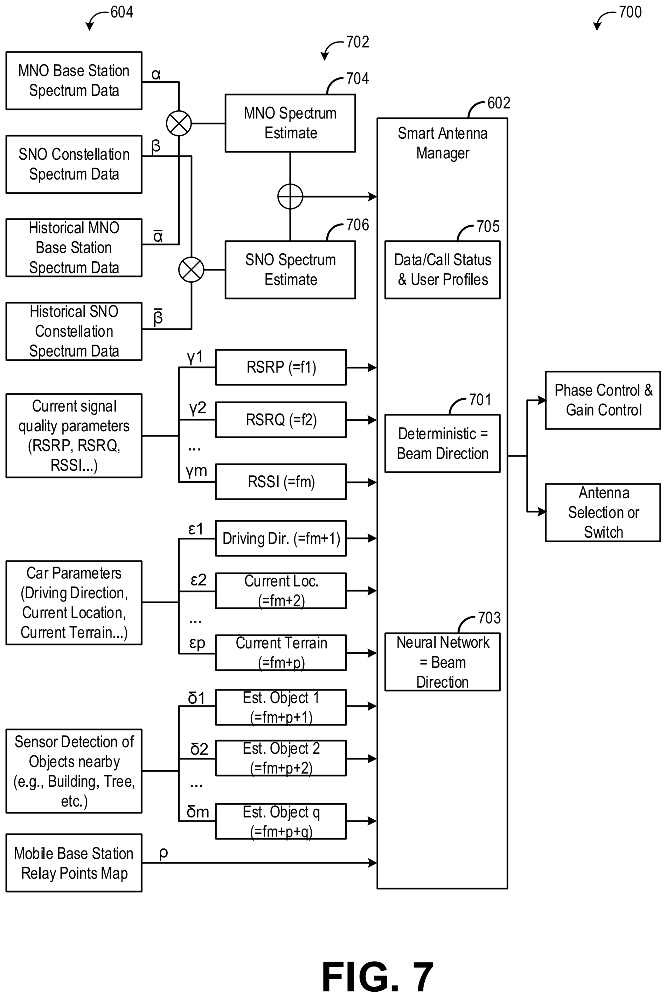

With reference to FIG. 1, there is shown an exemplary operating environment that comprises an inter-vehicle communications system 10 that can be used to implement the methods disclosed herein. Inter-vehicle communications system 10 generally includes one or more telematics-equipped vehicles 12, one or more wireless carrier systems 14, and one or more remote servers 16. In some examples, the inter-vehicle communications system 10 may additionally include various personal wireless devices 22, and a short message service center (SMSC) 24. It should be understood that the processes disclosed below with reference to FIGS. 6 and 7, can be used with any number of different systems and is not specifically limited to the operating environment shown here. Thus, the following paragraphs simply provide a brief overview of one possible configuration for providing wireless communication between each of the vehicles 12, and between the vehicles 12 and remote servers 16. However, it should be appreciated that other systems not shown here could be employed to execute the disclosed methods as well.

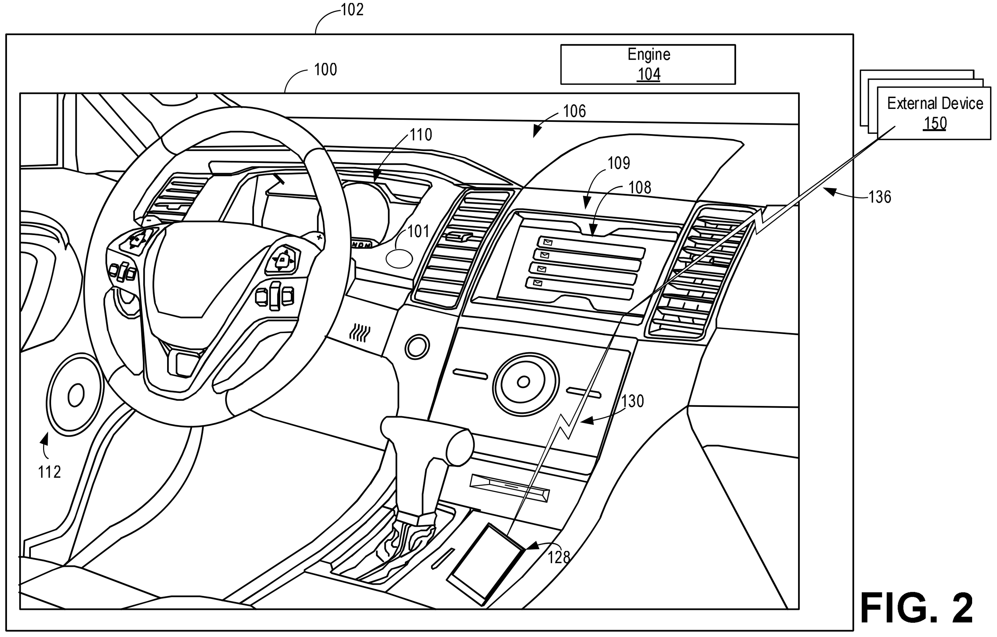

Vehicles 12 are depicted in the illustrated embodiment as passenger cars, but it should be appreciated that any other vehicle including motorcycles, trucks, sports utility vehicles (SUVs), recreational vehicles (RVs), marine vessels, aircraft, etc., can also be used. Some of the vehicle electronics 28 are shown generally in FIG. 1. More detailed depictions of example vehicle electronics which may be included in vehicles 12 are shown below with reference to FIGS. 2-5. The vehicle electronics 28 may include one or more of a telematics unit 30 (also referred to as a TCU), a microphone 32, one or more pushbuttons or other control inputs 34, an audio system 36, a visual display 38, and a navigation module 40 as well as a number of vehicle system modules (VSMs) 42. Some of these devices can be connected directly to the telematics unit 30 such as, for example, the microphone 32 and pushbutton(s) 34, whereas others are indirectly connected using one or more network connections, such as a communications bus 44 or an entertainment bus 46. Examples of suitable network connections include a controller area network (CAN), a media oriented system transfer (MOST), a local interconnection network (LIN), a local area network (LAN), and other appropriate connections such as Ethernet or others that conform with known ISO, SAE and IEEE standards and specifications, to name but a few.

Telematics unit 30 is an OEM-installed or aftermarket device that enables vehicles 12 to receive and/or transmit wireless signals corresponding to voice, text, and/or other data. Thus, telematics unit 30 may send and/or receive wireless signals (e.g., electromagnetic waves) such as Wifi, Bluetooth, radio, cellular, and so on. Telematics unit 30 may therefore be referred to as transceiver 30, since it may be capable of both sending and receiving wireless signals. Wireless signals produced by the telematics unit 30 of vehicles 12 may be sent to and received by one or more of the vehicles 12 and remote servers 16. Thus, each of the vehicles 12 may be in wireless communication with one another for sending and/or receiving information there-between via the telematics unit 30. Further, each of the vehicles 12 may be in wireless communication with the remote servers 16 for sending and/or receiving information there-between.

Wireless communication between the remote servers 16 and the vehicles 12 may be maintained even at greater distances between the servers 16 and the vehicles 12 by including relay towers 70. Each of the towers 70 may include sending and receiving antennas for relaying wireless signals between the remote servers 16 and the vehicles 12.

However, it should be appreciated that in some examples, relay towers 70 may not be included in the communications system 10, and that the vehicles 12 may be in direct wireless communication with the remote servers 16. Further, if one or more of the vehicles 12 are separated from the remote server 16 by a sufficient distance, and/or terrain (e.g., mountains) blocks the wireless signal from being transmitted there-between, then the one or more vehicles 12 may not be in wireless communication with the servers 16.

Additionally or alternatively, communications system 10 may utilize satellite communications to provide uni-directional or bi-directional communication between one or more of the vehicles 12 and the remote servers 16. This can be done using one or more communication satellites 62 and an uplink transmitting station 64. Uni-directional communication can be, for example, satellite radio services, wherein programming content (news, music, etc.) is received by transmitting station 64, packaged for upload, and then sent to the satellite 62, which broadcasts the programming to subscribers. Further, in some examples, each of the vehicles 12 may wirelessly transmit information to the satellite 62, which broadcasts the information to the servers 16.

As such, each of the vehicles 12 may communicate with one or more of remote server 16, other telematics-equipped vehicles 12, or some other entity or device capable of transmitting and/or receiving wireless signals. Telematics unit 30 enables the vehicle to offer a number of different services including those related to messaging, navigation, telephony, emergency assistance, diagnostics, infotainment, and so on. Data can be sent over a data connection, such as via a packet switching connection, or via a voice channel using techniques already known in the art. For combined services that involve both voice communication and data communication, the system can utilize a single call over a voice channel and switch as needed between voice and data transmission over the voice channel, and this can be done using techniques known to those skilled in the art.

According to one embodiment, telematics unit 30 utilizes a wireless modem 50 for data transmission, an electronic processing device 52, one or more digital memory devices 54, and one or more antennas 56. It should be appreciated that the modem can either be implemented through software or it can be a separate hardware component located internal or external to telematics unit 30. The modem can operate using any number of different standards or protocols such as EVDO, CDMA, GPRS, and EDGE. Wireless networking between the vehicles 12 and other networked devices can also be carried out using telematics unit 30. For this purpose, telematics unit 30 can be configured to communicate wirelessly according to one or more wireless protocols, such as any of the IEEE 802.11 protocols, WiMAX, or Bluetooth. When used for packet switching data communication such as TCP/IP, the telematics unit 30 can be configured with a static IP address or can set up to automatically receive an assigned IP address from another device on the network such as a router or from a network address server.

Processor 52 can be any type of device capable of processing electronic instructions including microprocessors, microcontrollers, host processors, controllers, vehicle communication processors, and application specific integrated circuits (ASICs). It can be a dedicated processor used only for telematics unit 30 or can be shared with other vehicle systems. Processor 52 executes various types of digitally-stored instructions, such as software or firmware programs stored in memory 54, which enable the telematics unit 30 to provide a wide variety of services. For instance, processor 52 can execute programs or process data to carry out at least a part of the methods discussed herein.

Telematics unit 30 can be used to provide a diverse range of vehicle services that involve wireless communication to and from the vehicles 12. Such services can include: remote control of certain vehicle features through the use of VSMs 42; turn-by-turn directions and other navigation-related services provided in conjunction with the navigation module 40; airbag deployment notification and other emergency or roadside assistance-related services that are provided in connection with one or more collision sensor interface modules such as a body control module (not shown); diagnostic reporting using one or more diagnostic modules; and infotainment-related services where music, webpages, movies, television programs, videogames and/or other information is downloaded by an infotainment module (not shown) and is stored for current or later playback. The above-listed services are by no means an exhaustive list of all of the capabilities of telematics unit 30, but are simply an enumeration of some of the services that the exemplary telematics unit is capable of offering. Furthermore, it should be understood that at least some of the aforementioned modules could be implemented in the form of software instructions saved internal or external to telematics unit 30, they could be hardware components located internal or external to telematics unit 30, or they could be integrated and/or shared with each other or with other systems located throughout the vehicles 12, to cite but a few possibilities. In the event that the modules are implemented as VSMs 42 located external to telematics unit 30, they could utilize communications bus 44 to exchange data and commands with the telematics unit 30.

In some examples, the antennas 56 of the telematics unit 30 include two or more antennas positioned at different locations on the vehicle. For example, one or more antennas may be positioned in a shark fin on the roof of the vehicle. Other antennas may be positioned in the windshield and/or rear window. In still further examples, one or more antennas may be in the form of a flexible printed circuit board having an antenna trace. In such examples, the antenna(s) may be positioned on a glass surface, such as the windshield, rear window, glass roof, and/or other glass windows of the vehicle. In some examples, the antennas 56 may include phased array antennas, such as an array of 8 or 16 antennas spaced apart by suitable distance (e.g., which may depend on the lowest frequency supported by the antenna). The antennas 56 may be configured for various different signal networks, such as cellular, Wi-Fi, and/or global navigation satellite system (GNSS) signals, for example. The antennas 56 may be configured for terrestrial networks, Satcom networks, and/or NTNs. Narrow Band NTN (NB-NTN) networks use geostationary satellites. Frequencies used are in L and S band. UE Devices that support NB-NTN use the same cellular antennas that are used for Terrestrial Networks (TN). The same Terrestrial Network antenna switching disclosed herein can be used for NB-NTN. Future NTNs may use low-earth orbit (LEO) satellites and demand separate phased array antennas which allow beam forming and tracking the satellite movement. The proposed frequencies for these are in FR2 band from 17 to 30 GHz. It is to be appreciated that the antennas 56 may include two or more antennas for each different signal network, at least in some examples.

The antennas 56 may be coupled to the telematics unit 30 via cabling, via an antenna matching circuit, and/or directly. For example, the telematics unit 30 or an antenna matching circuit may be mounted on an interior surface of a metal surface (e.g., a metal roof) of the vehicle, adjacent to an interface with a glass surface where the antenna is attached so that the antenna can be directly coupled to the telematics unit or antenna matching circuit without cabling. The antenna matching circuit may be coupled to the telematics unit via cabling. The antennas may be spaced apart from each by any suitable distance. Antenna matching circuits may comprise rigid printed circuit boards that have impedance matching capabilities.

Navigation module 40 may be configured to support any suitable navigation system such as GPS, GALILEO, GLONASS, IRNSS, etc. In examples where the navigation module 40 is a GPS navigation module, the module 40 receives signals from a constellation of GPS satellites 60. From these signals, the module 40 can determine vehicle position that is used for providing navigation and other position-related services to the vehicle driver. Navigation information can be presented on the display 38 (or other display within the vehicle) or can be presented verbally such as is done when supplying turn-by-turn navigation. The navigation services can be provided using a dedicated in-vehicle navigation module (which can be part of navigation module 40), or some or all navigation services can be done via telematics unit 30, wherein the position information is sent to a remote location for purposes of providing the vehicle with navigation maps, map annotations (points of interest, restaurants, etc.), route calculations, and the like. The position information can be supplied to remote servers 16, for other purposes, such as fleet management.

Apart from the audio system 36 and navigation module 40, the vehicles 12 can include other vehicle system modules (VSMs) 42 in the form of electronic hardware components that are located throughout the vehicle and typically receive input from one or more sensors and use the sensed input to perform diagnostic, monitoring, control, reporting and/or other functions. Each of the VSMs 42 is preferably connected by communications bus 44 to the other VSMs, as well as to the telematics unit 30, and can be programmed to run vehicle system and subsystem diagnostic tests and perform other functions. As examples, one VSM 42 can be an engine control module (ECM) that controls various aspects of engine operation such as fuel ignition and ignition timing, another VSM 42 can be a powertrain control module that regulates operation of one or more components of the vehicle powertrain, and another VSM 42 can be a body control module that governs various electrical components located throughout the vehicle, like the vehicle's power door locks. According to one embodiment, the ECM is equipped with on-board diagnostic (OBD) features that provide myriad real-time data, such as that received from various sensors including vehicle emissions sensors, and provide a standardized series of diagnostic trouble codes (DTCs) that allow a technician to rapidly identify and remedy malfunctions within the vehicle. As is appreciated by those skilled in the art, the above-mentioned VSMs are only examples of some of the modules that may be used in vehicles 12, as numerous others are also possible.

Vehicle electronics 28 may also include a number of vehicle user interfaces that provide vehicle occupants with a means of providing and/or receiving information, such as microphone 32, pushbuttons(s) 34, audio system 36, and visual display 38. As used herein, the term "vehicle user interface" broadly includes any suitable form of electronic device, including both hardware and software components, which is located on the vehicles 12 and enables a vehicle user to communicate with or through a component of the vehicles 12. In the description herein a vehicle user may also be referred to simply as a user, and/or a vehicle operator. Microphone 32 provides audio input to the telematics unit 30 to enable the driver or other occupant to provide voice commands and carry out hands-free calling. For this purpose, it can be connected to an on-board automated voice processing unit utilizing human-machine interface (HMI) technology known in the art. The pushbutton(s) 34 allow manual user input into the telematics unit 30 to provide data, response, or control input. Separate pushbuttons can be used for initiating emergency calls versus regular service assistance calls. Audio system 36 provides audio output to a vehicle occupant and can be a dedicated, stand-alone system or part of the primary vehicle audio system. According to the particular embodiment shown here, audio system 36 is operatively coupled to both vehicle bus 44 and entertainment bus 46 and can provide AM, FM and satellite radio, CD, DVD and other multimedia functionality. This functionality can be provided in conjunction with or independent of the infotainment module described above. Visual display 38 is preferably a graphics display, such as a touch screen on the instrument panel, a pop-up visual display, or a heads-up display reflected off of the windshield, and can be used to provide a multitude of input and output functions. Various other vehicle user interfaces can also be utilized, as the interfaces of FIG. 1 are only an example of one particular implementation.

Remote servers 16 may take the form of a mainframe computer, server computer, desktop computer, laptop computer, tablet computer, home entertainment computer, network computing device, mobile computing device, mobile communication device, gaming device, etc.

Remote servers 16 may include a logic subsystem 82 and a data-holding subsystem 84. Remote servers 16 may optionally include a display subsystem 86, communication subsystem 88, and/or other components not shown in FIG. 1. For example, remote servers 16 may also optionally include user input devices such as keyboards, mice, game controllers, cameras, microphones, and/or touch screens.

Logic subsystem 82 may include one or more physical devices configured to execute one or more instructions. For example, logic subsystem 82 may be configured to execute one or more instructions that are part of one or more applications, services, programs, routines, libraries, objects, components, data structures, or other logical constructs.

Such instructions may be implemented to perform a task, implement a data type, transform the state of one or more devices, or otherwise arrive at a desired result.

Logic subsystem 82 may include one or more processors that are configured to execute software instructions. Additionally or alternatively, the logic subsystem 82 may include one or more hardware or firmware logic machines configured to execute hardware or firmware instructions. Processors of the logic subsystem 82 may be single or multi-core, and the programs executed thereon may be configured for parallel or distributed processing. The logic subsystem 82 may optionally include individual components that are distributed throughout two or more devices, which may be remotely located and/or configured for coordinated processing. For example, the logic subsystem 82 may include several engines for processing and analyzing data. These engines may be wirelessly connected to one or more databases for processing data received from one or more of the vehicles 12. One or more aspects of the logic subsystem 82 may be virtualized and executed by remotely accessible networked computing devices configured in a cloud computing configuration.

Data-holding subsystem 84 may include one or more physical, non-transitory devices configured to hold data and/or instructions executable by the logic subsystem 82 to implement the herein described methods and processes. When such methods and processes are implemented, the state of data-holding subsystem 84 may be transformed (for example, to hold different data).

Data-holding subsystem 84 may include removable media and/or built-in devices. Data-holding subsystem 84 may include optical memory (for example, CD, DVD, HD-DVD, Blu-Ray Disc, etc.), and/or magnetic memory devices (for example, hard drive disk, floppy disk drive, tape drive, MRAM, etc.), and the like. Data-holding subsystem 84 may include devices with one or more of the following characteristics: volatile, nonvolatile, dynamic, static, read/write, readonly, random access, sequential access, location addressable, file addressable, and content addressable. In some embodiments, logic subsystem 82 and data-holding subsystem 84 may be integrated into one or more common devices, such as an application-specific integrated circuit or a system on a chip.

It is to be appreciated that data-holding subsystem 84 includes one or more physical, non-transitory devices. In contrast, in some embodiments aspects of the instructions described herein may be propagated in a transitory fashion by a pure signal (for example, an electromagnetic signal) that is not held by a physical device for at least a finite duration. Furthermore, data and/or other forms of information pertaining to the present disclosure may be propagated by a pure signal.

Remote servers 16 may include one or more databases 85 in data-holding subsystem 84 for storing processed requests for assistance, vehicle location data, and vehicle operator preferences.

When included, display subsystem 86 may be used to present a visual representation of data held by data-holding subsystem 84. As the herein described methods and processes change the data held by the data-holding subsystem 84, and thus transform the state of the data-holding subsystem 84, the state of display subsystem 86 may likewise be transformed to visually represent changes in the underlying data. Display subsystem 86 may include one or more display devices utilizing virtually any type of technology. Such display devices may be combined with logic subsystem 82 and/or data-holding subsystem 84 in a shared enclosure, or such display devices may be peripheral display devices.

When included, communication subsystem 88 may be configured to communicatively couple remote servers 16 with one or more other computing devices, such as vehicles 12. Communication subsystem 88 may include wired and/or wireless communication devices compatible with one or more different communication protocols. As non-limiting examples, communication subsystem 88 may be configured for communication via a wireless telephone network, a wireless local area network, a wired local area network, a wireless wide area network, a wired wide area network, etc. In some embodiments, communication subsystem 88 may allow remote servers 16 to send and/or receive messages to and/or from other devices via a network such as the public Internet.

In some examples, the relay towers 70 may be configured as part of a wireless cellular network. In such examples, the communications system 10 may include personal wireless devices 22 which can be, for example, cellular phones or other personal portable devices capable of wireless communication including, for the illustrated embodiment, SMS messaging capability. The devices 22 can communicate with the relay towers 70 to send and receive voice calls, SMS messages, and possibly other communications such as non-speech data for purposes of providing Internet access, weather information, stock information, etc. Further, the telematics unit 30 of each of the vehicles 12 may be capable of sending and/or receiving SMS messages, and phone calls via the cellular network provided by the relay towers 70.

As such, telematics unit 30 may utilize cellular communication according to either GSM or CDMA standards and thus may include a standard cellular chipset for voice communications like hands-free calling.

Further, communications system may include one or more mobile switching centers (MSCs) 72, as well as any other networking components required to connect wireless carrier system 14 with remote servers 16. Each of the relay towers 70 may therefore include sending and receiving antennas and a base station, with the base stations from different cell towers being connected to the MSC 72 either directly or via intermediary equipment such as a base station controller. Wireless carrier system 14 can implement any suitable communications technology, including for example, analog technologies such as AMPS, or the newer digital technologies such as CDMA (e.g., CDMA2000) or GSM/GPRS. As will be appreciated by those skilled in the art, various cell tower/base station/MSC arrangements are possible and could be used with wireless carrier systems 14. For instance, the base station and cell tower could be co-located at the same site or they could be remotely located from one another, each base station could be responsible for a single cell tower or a single base station could service various cell towers, and various base stations could be coupled to a single MSC, to name but a few of the possible arrangements.

Short message service center (SMSC) 24 is preferably in communication with relay towers 70 and is involved in the communication of SMS messages. SMSC 24 can operate according to a store-and-forward principal; that is, when a first user sends an SMS message that is intended for a second user, the SMS message gets stored at the SMSC until the second user is available to receive it. In other embodiments, the SMSC employs a store-and-forget approach where it only attempts to pass the SMS message along one time. These types of approaches enable users to send and receive SMS messages at any time, even if they are currently on a voice call. It should of course be appreciated that the exemplary representation of SMSC 24 is but one example of a suitable arrangement, as the SMSC could instead be provided according to some other configuration known in the art. In general, SMS messages sent to or from the vehicles 12 or wireless mobile devices 22 are received and/or transmitted by the relay towers 70, and pass through the MSC 72 and SMSC 24 for processing and routing to the remote servers 16.

An example interior of a cabin of one of the vehicles 12 is shown below with reference to FIG. 2.

FIG. 2 shows an example partial view of one type of environment for a communication system for data synchronization: an interior of a cabin 100 of a vehicle 102, in which a driver and/or one or more passengers may be seated. Vehicle 102 may be the same or similar to vehicles 12 described above with reference to FIG. 1. Vehicle 102 of FIG. 2 may be a motor vehicle including drive wheels (not shown) and an internal combustion engine 104. Internal combustion engine 104 may include one or more combustion chambers which may receive intake air via an intake passage and exhaust combustion gases via an exhaust passage. Vehicle 102 may be a road automobile, among other types of vehicles. In some examples, vehicle 102 may include a hybrid propulsion system including an energy conversion device operable to absorb energy from vehicle motion and/or the engine and convert the absorbed energy to an energy form suitable for storage by an energy storage device. Vehicle 102 may include a fully electric vehicle, incorporating fuel cells, solar energy capturing elements, and/or other energy storage systems for powering the vehicle.

As shown, an instrument panel 106 may include various displays and controls accessible to a driver (also referred to as the user) of vehicle 102. For example, instrument panel 106 may include a touch screen 108 of an in-vehicle computing system 109 (e.g., an infotainment system), an audio system control panel, and an instrument cluster 110. While the example system shown in FIG. 2 includes audio system controls that may be performed via a user interface of in-vehicle computing system 109, such as touch screen 108 without a separate audio system control panel, in other embodiments, the vehicle may include an audio system control panel, which may include controls for a conventional vehicle audio system such as a radio, compact disc player, MP3 player, etc. The audio system controls may include features for controlling one or more aspects of audio output via speakers 112 of a vehicle speaker system. For example, the in-vehicle computing system or the audio system controls may control a volume of audio output, a distribution of sound among the individual speakers of the vehicle speaker system, an equalization of audio signals, and/or any other aspect of the audio output. In further examples, in-vehicle computing system 109 may adjust a radio station selection, a playlist selection, a source of audio input (e.g., from radio or CD or MP3), etc., based on user input received directly via touch screen 108, or based on data regarding the user (such as a physical state and/or environment of the user) received via external devices 150 and/or mobile device 128.

In some embodiments, one or more hardware elements of in-vehicle computing system 109, such as touch screen 108, a display screen, various control dials, knobs and buttons, memory, processor(s), and any interface elements (e.g., connectors or ports) may form an integrated head unit that is installed in instrument panel 106 of the vehicle. The head unit may be fixedly or removably attached in instrument panel 106. In additional or alternative embodiments, one or more hardware elements of the in-vehicle computing system may be modular and may be installed in multiple locations of the vehicle.

The cabin 100 may include one or more sensors for monitoring the vehicle, the user, and/or the environment. For example, the cabin 100 may include one or more seat-mounted pressure sensors configured to measure the pressure applied to the seat to determine the presence of a user, door sensors configured to monitor door activity, humidity sensors to measure the humidity content of the cabin, microphones to receive user input in the form of voice commands, to enable a user to conduct telephone calls, and/or to measure ambient noise in the cabin 100, etc. It is to be understood that the above-described sensors and/or one or more additional or alternative sensors may be positioned in any suitable location of the vehicle. For example, sensors may be positioned in an engine compartment, on an external surface of the vehicle, and/or in other suitable locations for providing information regarding the operation of the vehicle, ambient conditions of the vehicle, a user of the vehicle, etc. Information regarding ambient conditions of the vehicle, vehicle status, or vehicle driver may also be received from sensors external to/separate from the vehicle (that is, not part of the vehicle system), such as sensors coupled to external devices 150 and/or mobile device 128.

Cabin 100 may also include one or more user objects, such as mobile device 128, that are stored in the vehicle before, during, and/or after travelling. The mobile device 128 may include a smart phone, a tablet, a laptop computer, a portable media player, and/or any suitable mobile computing device. The mobile device 128 may be connected to the in-vehicle computing system via communication link 130. The communication link 130 may be wired (e.g., via Universal Serial Bus [USB], Mobile High-Definition Link [MHL], High-Definition Multimedia Interface [HDMI], Ethernet, etc.) or wireless (e.g., via BLUETOOTH, WIFI, WIFI direct Near-Field Communication [NFC], cellular connectivity, etc.) and configured to provide two-way communication between the mobile device and the in-vehicle computing system. The mobile device 128 may include one or more wireless communication interfaces for connecting to one or more communication links (e.g., one or more of the example communication links described above). The wireless communication interface may include one or more physical devices, such as antenna(s) or port(s) coupled to data lines for carrying transmitted or received data, as well as one or more modules/drivers for operating the physical devices in accordance with other devices in the mobile device. For example, the communication link 130 may provide sensor and/or control signals from various vehicle systems (such as vehicle audio system, climate control system, etc.) and the touch screen 108 to the mobile device 128 and may provide control and/or display signals from the mobile device 128 to the in-vehicle systems and the touch screen 108. The communication link 130 may also provide power to the mobile device 128 from an in-vehicle power source in order to charge an internal battery of the mobile device.

In-vehicle computing system 109 may also be communicatively coupled to additional devices operated and/or accessed by the user but located external to vehicle 102, such as one or more external devices 150. In the depicted embodiment, external devices are located outside of vehicle 102 though it will be appreciated that in alternate embodiments, external devices may be located inside cabin 100. The external devices may include a server computing system, personal computing system, portable electronic device, electronic wrist band, electronic head band, portable music player, electronic activity tracking device, pedometer, smart-watch, navigation system, etc. External devices 150 may be connected to the in-vehicle computing system via communication link 136 which may be wired or wireless, as discussed with reference to communication link 130, and configured to provide two-way communication between the external devices and the in-vehicle computing system. For example, external devices 150 may include one or more sensors and communication link 136 may transmit sensor output from external devices 150 to in-vehicle computing system 109 and touch screen 108. External devices 150 may also store and/or receive information regarding contextual data, user behavior/preferences, operating rules, etc. and may transmit such information from the external devices 150 to in-vehicle computing system 109 and touch screen 108.

In-vehicle computing system 109 may analyze the input received from external devices 150, mobile device 128, and/or other input sources and select settings for various in-vehicle systems (such as climate control system or audio system), provide output via touch screen 108 and/or speakers 112, communicate with mobile device 128 and/or external devices 150, and/or perform other actions based on the assessment. In some embodiments, all or a portion of the assessment may be performed by the mobile device 128 and/or the external devices 150.

In some embodiments, one or more of the external devices 150 may be communicatively coupled to in-vehicle computing system 109 indirectly, via mobile device 128 and/or another of the external devices 150. For example, communication link 136 may communicatively couple external devices 150 to mobile device 128 such that output from external devices 150 is relayed to mobile device 128. Data received from external devices 150 may then be aggregated at mobile device 128 with data collected by mobile device 128, the aggregated data then transmitted to in-vehicle computing system 109 and touch screen 108 via communication link 130. Similar data aggregation may occur at a server system and then transmitted to in-vehicle computing system 109 and touch screen 108 via communication link 136/130.

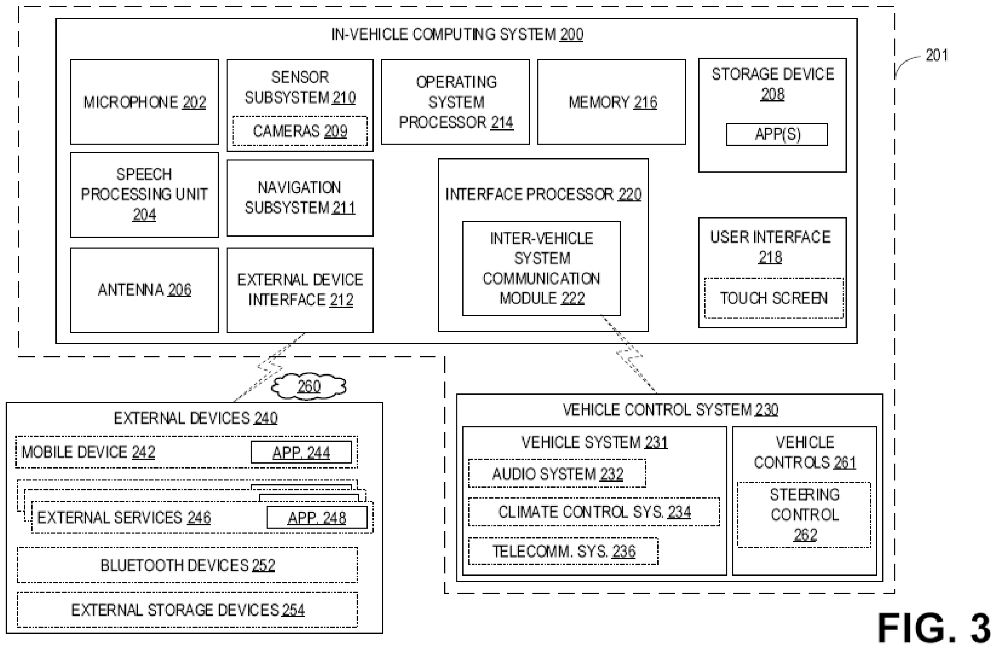

FIG. 3 shows a block diagram of an in-vehicle computing system 200 configured and/or integrated inside vehicle 201. In-vehicle computing system 200 may be an example of in-vehicle computing system 109 of FIG. 2 and/or may perform one or more of the methods described herein in some embodiments. In some examples, the in-vehicle computing system may be a vehicle infotainment system configured to provide information-based media content (audio and/or visual media content, including entertainment content, navigational services, etc.) to a vehicle user to enhance the operator's in-vehicle experience. The vehicle infotainment system may include, or be coupled to, various vehicle systems, sub-systems, hardware components, as well as software applications and systems that are integrated in, or integratable into, vehicle 201 in order to enhance an in-vehicle experience for a driver and/or a passenger.

The in-vehicle computing system 200 may be configured to detect the occurrence of an accident, impact, or mechanical failure of the vehicle 201 based on input received from the various sensors of vehicle 201. Further, in some examples, a vehicle user, may be able to signal that an impact, accident, mechanical failure, etc., has occurred via user inputs such as buttons, touch screen, etc., of user interface 218.

In-vehicle computing system 200 may include one or more processors including an operating system processor 214 and an interface processor 220. Operating system processor 214 may execute an operating system on the in-vehicle computing system, and control input/output, display, playback, and other operations of the in-vehicle computing system. Interface processor 220 may interface with a vehicle control system 230 via an inter-vehicle system communication module 222.

Inter-vehicle system communication module 222 may output data to other vehicle systems 231 and vehicle control elements 261, while also receiving data input from other vehicle components and systems 231, 261, e.g. by way of vehicle control system 230. When outputting data, inter-vehicle system communication module 222 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System [GPS] sensors, etc.), digital signals propagated through vehicle data networks (such as an engine controller area network [CAN] bus through which engine related information may be communicated, a climate control CAN bus through which climate control related information may be communicated, and a multimedia data network through which multimedia data is communicated between multimedia components in the vehicle). For example, the in-vehicle computing system may retrieve from the engine CAN bus the current speed of the vehicle estimated by the wheel sensors, a power state of the vehicle via a battery and/or power distribution system of the vehicle, an ignition state of the vehicle, etc. In addition, other interfacing means such as Ethernet may be used as well without departing from the scope of this disclosure.

A non-volatile storage device 208 may be included in in-vehicle computing system 200 to store data such as instructions executable by processors 214 and 220 in non-volatile form. The storage device 208 may store application data to enable the in-vehicle computing system 200 to run an application for connecting to a cloud-based server and/or collecting information for transmission to the cloud-based server (e.g., remote servers 16 shown in FIG. 1). The application may retrieve information gathered by vehicle systems/sensors, input devices (e.g., user interface 218), devices in communication with the in-vehicle computing system (e.g., a mobile device connected via a Bluetooth link), etc. In-vehicle computing system 200 may further include a volatile memory 216. Volatile memory 216 may be random access memory (RAM). Non-transitory storage devices, such as non-volatile storage device 208 and/or volatile memory 216, may store instructions and/or code that, when executed by a processor (e.g., operating system processor 214 and/or interface processor 220), controls the in-vehicle computing system 200 to perform one or more of the actions described in the disclosure.

A microphone 202 may be included in the in-vehicle computing system 200 to receive voice commands from a user, to measure ambient noise in the vehicle, to determine whether audio from speakers of the vehicle is tuned in accordance with an acoustic environment of the vehicle, etc. A speech processing unit 204 may process voice commands, such as the voice commands received from the microphone 202. In some embodiments, in-vehicle computing system 200 may also be able to receive voice commands and sample ambient vehicle noise using a microphone included in an audio system 232 of the vehicle.

One or more additional sensors may be included in a sensor subsystem 210 of the in-vehicle computing system 200. For example, the sensor subsystem 210 may include a camera, such as a rear view camera for assisting a user in parking the vehicle and/or a cabin camera for identifying a user (e.g., using facial recognition and/or user gestures). Sensor subsystem 210 of in-vehicle computing system 200 may communicate with and receive inputs from various vehicle sensors and may further receive user inputs. For example, the inputs received by sensor subsystem 210 may include transmission gear position, transmission clutch position, gas pedal input, brake input, transmission selector position, vehicle speed, engine speed, mass airflow through the engine, ambient temperature, intake air temperature, etc., as well as inputs from climate control system sensors (such as heat transfer fluid temperature, antifreeze temperature, fan speed, passenger compartment temperature, desired passenger compartment temperature, ambient humidity, etc.), an audio sensor detecting voice commands issued by a user, a fob sensor receiving commands from and optionally tracking the geographic location/proximity of a fob of the vehicle, etc. While certain vehicle system sensors may communicate with sensor subsystem 210 alone, other sensors may communicate with both sensor subsystem 210 and vehicle control system 230, or may communicate with sensor subsystem 210 indirectly via vehicle control system 230. A navigation subsystem 211 of in-vehicle computing system 200 may generate and/or receive navigation information such as location information (e.g., via a GPS sensor and/or other sensors from sensor subsystem 210), route guidance, traffic information, point-of-interest (POI) identification, and/or provide other navigational services for the driver.

External device interface 212 of in-vehicle computing system 200 may be coupleable to and/or communicate with one or more external devices 240 located external to vehicle 201. While the external devices are illustrated as being located external to vehicle 201, it is to be understood that they may be temporarily housed in vehicle 201, such as when the user is operating the external devices while operating vehicle 201. In other words, the external devices 240 are not integral to vehicle 201. The external devices 240 may include a mobile device 242 (e.g., connected via a Bluetooth, NFC, WIFI direct, or other wireless connection) or an alternate Bluetooth-enabled device 252. Mobile device 242 may be a mobile phone, smart phone, wearable devices/sensors that may communicate with the in-vehicle computing system via wired and/or wireless communication, or other portable electronic device(s). Other external devices include external services 246. For example, the external devices may include extra-vehicular devices that are separate from and located externally to the vehicle. Still other external devices include external storage devices 254, such as solid-state drives, pen drives, USB drives, etc. For example, the external storage devices 254 may include servers 16 described above with reference to FIG. 1.

As such, external storage devices 254 may receive requests for assistance from the in-vehicle computing system 200. Operating system processor 214 may determine whether an impact, accident, mechanical and/or electrical failure, occupant medical emergency, of other type of emergency has occurred based on outputs received from the vehicle sensors. Additionally or alternatively, a vehicle driver or passenger may communicate a need for assistance to the operating system processor 214 via the user interface 218. In response to a determination that an impact, accident, mechanical failure, or other emergency has occurred the operating system processor 214 may transmit a request for assistance to the external storage devices 254.

The external storage devices 254 may process the request and determine the desired recipients of the assistance request. In some embodiments, the storage devices 254 may transmit the assistance request to vehicle located in the same geographic area, or within a threshold distance of the vehicle from which the assistance request was received so that nearby vehicles may assist the vehicle. Further, the storage devices 254 may contact external services 246 such as ambulances, tow trucks, police, etc., to provide the desired assistance to the vehicle.

External devices 240 may communicate with in-vehicle computing system 200 either wirelessly or via connectors without departing from the scope of this disclosure. For example, external devices 240 may communicate with in-vehicle computing system 200 through the external device interface 212 over network 260, a universal serial bus (USB) connection, a direct wired connection, a direct wireless connection, and/or other communication link.

The external device interface 212 may provide a communication interface to enable the in-vehicle computing system to communicate with mobile devices associated with contacts of the driver. For example, the external device interface 212 may enable phone calls to be established and/or text messages (e.g., SMS, MMS, etc.) to be sent (e.g., via a cellular communications network) to a mobile device associated with a contact of the driver. The external device interface 212 may additionally or alternatively provide a wireless communication interface to enable the in-vehicle computing system to synchronize data with one or more devices in the vehicle (e.g., the driver's mobile device) via WIFI direct, as described in more detail below.

One or more applications 244 may be operable on mobile device 242. As an example, mobile device application 244 may be operated to aggregate user data regarding interactions of the user with the mobile device. For example, mobile device application 244 may aggregate data regarding music playlists listened to by the user on the mobile device, telephone call logs (including a frequency and duration of telephone calls accepted by the user), positional information including locations frequented by the user and an amount of time spent at each location, etc. The collected data may be transferred by application 244 to external device interface 212 over network 260. In addition, specific user data requests may be received at mobile device 242 from in-vehicle computing system 200 via the external device interface 212. The specific data requests may include requests for determining where the user is geographically located, an ambient noise level and/or music genre at the user's location, an ambient weather condition (temperature, humidity, etc.) at the user's location, etc. Mobile device application 244 may send control instructions to components (e.g., microphone, etc.) or other applications (e.g., navigational applications) of mobile device 242 to enable the requested data to be collected on the mobile device. Mobile device application 244 may then relay the collected information back to in-vehicle computing system 200.

Likewise, one or more applications 248 may be operable on external services 246. As an example, external services applications 248 may be operated to aggregate and/or analyze data from multiple data sources. For example, external services applications 248 may aggregate data from one or more social media accounts of the user, data from the in-vehicle computing system (e.g., sensor data, log files, user input, etc.), data from an internet query (e.g., weather data, POI data), etc. The collected data may be transmitted to another device and/or analyzed by the application to determine a context of the driver, vehicle, and environment and perform an action based on the context (e.g., requesting/sending data to other devices).

Vehicle control system 230 may include controls for controlling aspects of various vehicle systems 231 involved in different in-vehicle functions. These may include, for example, controlling aspects of vehicle audio system 232 for providing audio entertainment to the vehicle occupants, aspects of climate control system 234 for meeting the cabin cooling or heating needs of the vehicle occupants, as well as aspects of telecommunication system 236 for enabling vehicle occupants to establish telecommunication linkage with others.

Audio system 232 may include one or more acoustic reproduction devices including electromagnetic transducers such as speakers. Vehicle audio system 232 may be passive or active such as by including a power amplifier. In some examples, in-vehicle computing system 200 may be the only audio source for the acoustic reproduction device or there may be other audio sources that are connected to the audio reproduction system (e.g., external devices such as a mobile phone). The connection of any such external devices to the audio reproduction device may be analog, digital, or any combination of analog and digital technologies.

Climate control system 234 may be configured to provide a comfortable environment within the cabin or passenger compartment of vehicle 201. Climate control system 234 includes components enabling controlled ventilation such as air vents, a heater, an air conditioner, an integrated heater and air-conditioner system, etc. Other components linked to the heating and airconditioning setup may include a windshield defrosting and defogging system capable of clearing the windshield and a ventilation-air filter for cleaning outside air that enters the passenger compartment through a fresh-air inlet.

Vehicle control system 230 may also include controls for adjusting the settings of various vehicle controls 261 (or vehicle system control elements) related to the engine and/or auxiliary elements within a cabin of the vehicle, such as steering wheel controls 262 (e.g., steering wheel-mounted audio system controls, cruise controls, windshield wiper controls, headlight controls, turn signal controls, etc.), instrument panel controls, microphone(s), accelerator/brake/clutch pedals, a gear shift, door/window controls positioned in a driver or passenger door, seat controls, cabin light controls, audio system controls, cabin temperature controls, etc. Vehicle controls 261 may also include internal engine and vehicle operation controls (e.g., engine controller module, actuators, valves, etc.) that are configured to receive instructions via the CAN bus of the vehicle to change operation of one or more of the engine, exhaust system, transmission, and/or other vehicle system. The control signals may also control audio output at one or more speakers of the vehicle's audio system 232. For example, the control signals may adjust audio output characteristics such as volume, equalization, audio image (e.g., the configuration of the audio signals to produce audio output that appears to a user to originate from one or more defined locations), audio distribution among a plurality of speakers, etc. Likewise, the control signals may control vents, air conditioner, and/or heater of climate control system 234. For example, the control signals may increase delivery of cooled air to a specific section of the cabin.

Control elements positioned on an outside of a vehicle (e.g., controls for a security system) may also be connected to computing system 200, such as via communication module 222. The control elements of the vehicle control system may be physically and permanently positioned on and/or in the vehicle for receiving user input. In addition to receiving control instructions from in-vehicle computing system 200, vehicle control system 230 may also receive input from one or more external devices 240 operated by the user, such as from mobile device 242. This allows aspects of vehicle systems 231 and vehicle controls 261 to be controlled based on user input received from the external devices 240.

In-vehicle computing system 200 may further include an antenna 206. Antenna 206 is shown as a single antenna, but may comprise one or more antennas in some embodiments. The in-vehicle computing system may obtain broadband wireless internet access via antenna 206, and may further receive broadcast signals such as radio, television, weather, traffic, and the like. The in-vehicle computing system may receive positioning signals such as GPS signals via one or more antennas 206. The in-vehicle computing system may also receive wireless commands via RF such as via antenna(s) 206 or via infrared or other means through appropriate receiving devices. In some embodiments, antenna 206 may be included as part of audio system 232 or telecommunication system 236. Additionally, antenna 206 may provide AM/FM radio signals to external devices 240 (such as to mobile device 242) via external device interface 212. Antenna 206 is a non-limiting example of an antenna of antennas 56.

One or more elements of the in-vehicle computing system 200 may be controlled by a user via user interface 218. User interface 218 may include a graphical user interface presented on a touch screen, such as touch screen 108 of FIG. 2, and/or user-actuated buttons, switches, knobs, dials, sliders, etc. For example, user-actuated elements may include steering wheel controls, door and/or window controls, instrument panel controls, audio system settings, climate control system settings, and the like. A user may also interact with one or more applications of the in-vehicle computing system 200 and mobile device 242 via user interface 218. In addition to receiving a user's vehicle setting preferences on user interface 218, vehicle settings selected by in-vehicle control system may be displayed to a user on user interface 218. Notifications and other messages (e.g., received messages), as well as navigational assistance, may be displayed to the user on a display of the user interface. User preferences/information and/or responses to presented messages may be performed via user input to the user interface.

It should be appreciated that the telematics unit 30 as described hereinabove with regard to FIG. 1 may be formed from multiple components of the in-vehicle computing system 200, including but not limited to the antenna 206 and the external device interface 212.

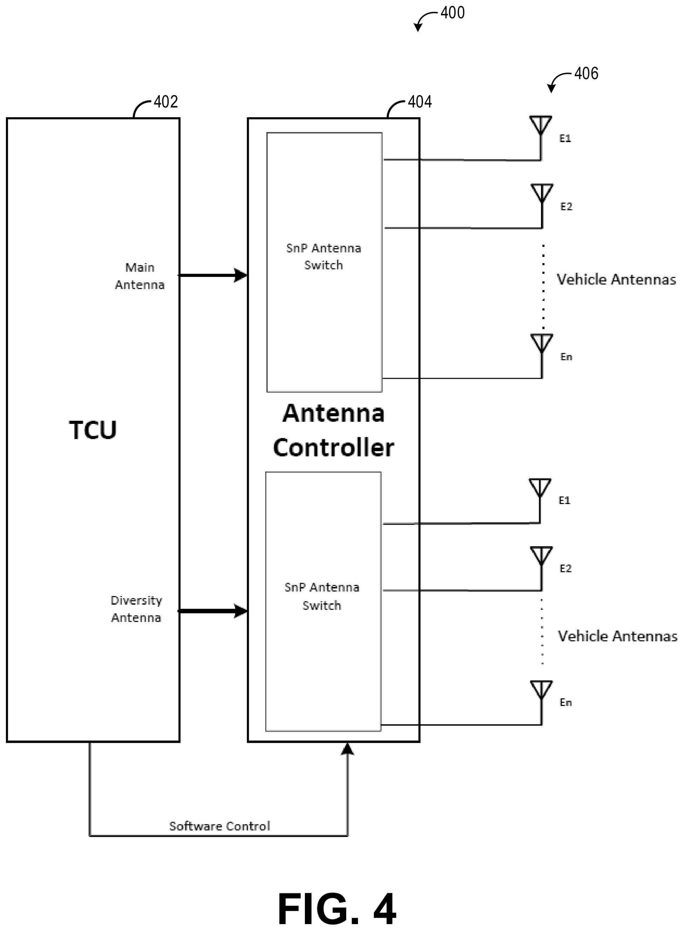

As an illustrative example, FIG. 4 shows a block diagram depicting an example antenna control system 400 including a telematics unit 402 (e.g., TCU), an antenna controller 404, and a plurality of antennas 406. The telematics unit 402 may be implemented as the telematics unit 30 in a vehicle 12, for example. The telematics unit 402 comprises a plurality of hardware components housed within a housing, such as a printed circuit board (PCB) for mechanically supporting and electrically connecting electronic components of the telematics unit 402, such as a radio. Further, the PCB may further support the wireless modem 50, the electronic processing device 52, and the one or more digital memory devices 54 described hereinabove with regard to FIG. 1. The telematics unit 402 further includes a plurality of connectors for coupling the telematics unit 402 to other elements or components of an in-vehicle computing system such as the in-vehicle computing system 200.

The antenna controller 404 may include one or more switches that may be adjusted (e.g., actuated) to select an antenna from the plurality of antennas 406 for receiving and/or sending wireless signals (e.g., a selected antenna may be in electronic communication with the telematics unit 402 to send/receive signals as dictated by the telematics unit 402). The antenna controller 404 may be incorporated in the telematics unit 402 or may be separate from but operably coupled to the telematics unit 402. The telematics unit 402 may include instructions that may be executed to select an antenna based on known/predicted signal information (e.g., mobile network operator base station locations and coverage; satellite network operator station locations and coverage) and current vehicle information, as will be described in more detail below with respect to FIG. 6, and one or more of the switches of the antenna controller 404 may be adjusted accordingly. In the example shown in FIG. 4, the antenna controller 404 includes two switches (or two groups of switches), each coupled between the telematics unit 402 and a respective subset of antennas of the plurality of antennas 406. However, when the plurality of antennas 406 includes more than two subsets of antennas, the antenna controller 404 may include more than two switches.

The plurality of antennas 406 is configured for supporting the transmission and reception of wireless signals according to one or more different protocols. As shown, the plurality of antennas 406 may include two subsets of antennas. Each subset may include a number n of antennas, including a first antenna E1, a second antenna E2, and so on, up to an nth antenna En. In some examples, the plurality of antennas 406 may include a first subset of antennas that each support transmission and reception of wireless signals according to a first protocol (e.g., cellular, such that each antenna of the first subset may comprise a 5G or LTE antenna) and a second subset of antennas that each support transmission and reception of wireless signals according to a second, different protocol, such as GNSS. The antennas in the first subset may have radiation patterns optimized for different fixed directions (e.g., up, left, right, forward, backward, all relative to the driver of the vehicle). For example, a first antenna (e.g., E1) may have a first radiation pattern optimized for a first fixed direction (e.g., up) and a second antenna (e.g., E2) may have a second radiation pattern optimized for a second fixed direction (e.g., left). The antennas in the second subset may have radiation patterns optimized for different fixed directions (e.g., up, left, right, forward, backward, all relative to the driver of the vehicle), similar to the antennas of the first subset. As shown, the antenna controller 404 may include a first switch that may be adjusted to select an antenna from the first subset of antennas and a second switch that may be adjusted to select an antenna from the second subset of antennas. Further, the telematics unit 402 may include a main antenna interface that may send/receive signals via the first switch (and hence first subset of antennas) and a diversity antenna interface that may send/receive signals via the second switch (and hence second subset of antennas). However, other configurations are possible without departing from the scope of this disclosure, such as each switch being coupled between the telematics unit 402 and each antenna of the plurality of antennas.

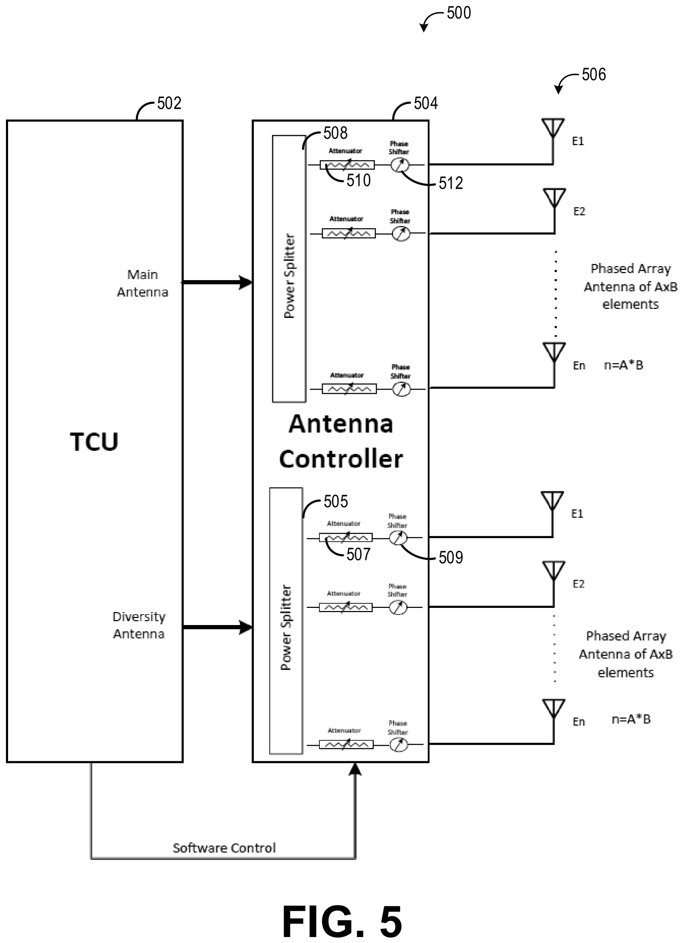

As another illustrative example, FIG. 5 shows a block diagram depicting an example antenna control system 500 including a telematics unit 502 (e.g., TCU), an antenna controller 504, and a plurality of antennas 506. The telematics unit 502 may the same as telematics unit 402 or a non-limiting example of telematics unit 502. In the example of FIG. 5, the plurality of antennas 506 may include two phased array antennas, with each phased array antenna comprised of an array of AxB antenna elements. It should be appreciated that more or fewer phased array antennas may be included without departing from the scope of this disclosure.

The antenna controller 504 may include components for controlling the phase and/or amplitude of each antenna element of the phased array antennas based on commands received from the telematics unit 502. For example, the antenna controller 504 is configured to split the transmit (Tx) or receive (Rx) radio signal from the telematics unit 502 into n parts, and set the amplitude and phase of the RF signal at each of the n antenna elements. To achieve this, the antenna controller 504 may include a first power splitter 508 and a respective attenuator and phase shifter for each element of the first phased array antenna (such as attenuator 510 and phase shifter 512 for a first element E1). The first power splitter 508 may split the radio signal from the telematics unit 502 into n parts (corresponding to the number of elements in the first phased array antenna) and each attenuator and phase shifter may set the amplitude and phase, respectively, for the respective RF signal corresponding to that element. The antenna controller 504 may include a second power splitter 505 and attenuators/phase shifters for each element of the second phased array antenna (such as attenuator 510 and phase shifter 512 for a first element E1). In the example shown, the first power splitter 508 may receive a radio signal from the main antenna interface and the second power splitter 505 may receive a radio signal from the diversity antenna interface, but other configurations are possible.

It is to be appreciated that in some examples, the antenna control system 400 and the antenna control system 500 may be incorporated into one overall antenna control system. For example, the plurality of antennas may include both the plurality of antennas 406 and the plurality of antennas 506, and an antenna controller may include both switches for selecting appropriate antennas and the components for adjusting the phased array antennas (e.g., power splitters, attenuators, and phase shifters).

FIG. 6 is a block diagram illustrating a process 600 for antenna selection/control via a smart antenna manager 602, according to embodiments disclosed herein. The smart antenna manager 602 may be incorporated into a telematics unit, such as telematics unit 30, 402, and/or 502.

The smart antenna manager 602 may receive a plurality of inputs 604 and may perform deterministic antenna parameter selection or neural-network based antenna parameter selection based on the inputs. The smart antenna manager 602 may then control an antenna controller (e.g., antenna controller 404 and/or 504) to perform phase control and gain control (e.g., for phased array antennas) or antenna selection and/or switching for a plurality of antennas (e.g., antennas 56, 406, and/or 506). The plurality of inputs 604 may include network information (static and historical), dynamic information for the vehicle, and R18/5G-Advanced (and beyond) related information (or heterogeneous data or other information).

The network information may include a mobile network operator (MNO) base station map, coverage map, and spectrum/band map. With this information, the vehicle (e.g., the smart antenna manager 602) may determine the direction, spectrum, and signal strength of the available nearby mobile network operator base stations. The network information may further include a satellite network operator (SNO) constellation map, coverage map, and spectrum/band map. With this information, the vehicle (e.g., the smart antenna manager 602) may determine the direction, spectrum, and signal strength of the available satellite network operator satellite stations. The network information may additionally include network coverage prediction, which may be based on historical data and federated learning and machine learning. Using the history of the network and wireless channel including available base station, spectrum, signal strength and quality, and handover per different time, traffic, weather, etc., the vehicle (e.g., the smart antenna manager 602) may determine the network and channel status in advance for the similar situation, and the vehicle could try to use the best network based on this expectation to secure the connectivity quality. The network prediction could be done with the available network history and statistics using federated learning and machine learning for the various input and situations to get the best prediction. As used herein, the term "situation" may refer to the current parameters of the vehicle, including day/time, location, orientation, route, road conditions, and/or weather.

The dynamic vehicle information may include the current signal quality from the serving network. Beyond the above pre-available information, the signal quality of the current situation (e.g., the signal quality at the current point in time, which may be affected by vehicle surroundings and other factors) may be used to use the smart antenna configuration. This signal quality may have related information including available spectrum, direction, signal strength, etc. For example, the MNO base station, coverage, and spectrum/band maps may define the expected direction, spectrum, and signal strength of the available nearby mobile network operator base stations, while the current signal quality may indicate the actual spectrum, direction, signal strength, etc., of signals currently communicated with the mobile network operator base stations.

The dynamic vehicle information may further include current vehicle information, such as vehicle location, orientation, signal angle of arrival, speed, and nearby terrain information. Based on the vehicle current location, direction, and route, the relative direction to the desired base station (MNO or SNO) may change. Based on the vehicle current speed and route, the vehicle (e.g., the smart antenna manager 602) may determine how to handover within the same network (e.g., which antenna to use from a selected subset) or between different networks correctly (e.g., to switch from one network to another). With the terrain information along with MNO/ SNO base station information, the vehicle (e.g., the smart antenna manager 602) may determine how to get the better signal and avoid any signal blocking by natural interferences.

The dynamic vehicle information may additionally include sensor data. The sensor data may indicate/identify tall buildings, trees, etc. Beyond above available data and information, sensors such as cameras (e.g., cameras 209), radar, and lidar (included on the vehicle or received from a remote device, another vehicle, etc.) may see any other (or temporary) obstacles between vehicle and MNO/SNO base station which could bring signal quality issues such as stalled truck, tree, building, etc.

The other information that may be included in the plurality of inputs 604 may include other data such as mobile MNO base station location. In case there is any mobile or portable MNO base station which could be utilized for the connection relay, it could be used for the network connection as well. If another protocol could be used for the network extension such as Wi-Fi, private networks, D2D connectivity, etc., it also could be considered for the network connection as well.

Based on this information, the smart antenna manager 602 may decide on the appropriate antenna selection to get the best quality of service. The smart antennal manager 602 may employ deterministic or a neural network based selection. In case of future NTNs that use LEO satellites, the same smart antenna manager may also have the software to control the phased array antenna (e.g., perform beamforming) for tracking the satellite. The smart antenna manager 602 may store information about each antenna of the plurality of antennas, such as type (e.g., phased array or not, network compatibility/spectrum and band compatibility) and location or directionality. The smart antenna manager 602 may determine a desired radiation pattern for sending/receiving wireless signals based on the above-described information and shape the radiation pattern by selecting an appropriate antenna (according to the stored antenna information) and/or performing the phase and gain control (when the antenna is a phased array antenna).

FIG. 7 shows a more detailed example of a process 700 for antenna selection/control via the smart antenna manager 602. The plurality of inputs 604 may include a set of inputs 702 that may be fed to a deterministic model 701 or neural network model 703 of the smart antenna manager 602. The set of inputs 702 may include processed and/or unprocessed versions of the plurality of inputs 604. The smart antenna manager 602 is configured to process the various inputs as illustrated in FIG. 7, including network information parameters $(\alpha, \beta)$, current signal quality parameters $(\gamma)$, vehicle parameters $(\varepsilon)$, and sensor detection parameters $(\delta)$. These inputs are processed through either deterministic algorithms or neural network-based algorithms to determine optimal beam direction coordinates (Azimuth x, Elevation y) for antenna control.

The set of inputs 702 may include an MNO spectrum estimate 704 generated based on current MNO base station spectrum data ($\alpha$) and historical MNO base station spectrum data ($\overline{\alpha}$), and an SNO spectrum estimate 706 based on current SNO constellation spectrum data ($\beta$) and historical SNO constellation spectrum data ($\overline{\beta}$). The current MNO base station spectrum data ($\alpha$) and historical MNO base station spectrum data ($\overline{\alpha}$) may be combined in a suitable manner to generate the MNO spectrum estimate, such as summing, multiplying, or otherwise modifying the current MNO base station spectrum data by the historical MNO base station spectrum data. The current SNO constellation spectrum data ($\beta$) and historical SNO constellation spectrum data ($\overline{\beta}$) may be combined in a suitable manner to generate the SNO spectrum estimate, such as summing, multiplying, or otherwise modifying the current SNO constellation spectrum data by the historical SNO constellation spectrum data. It is to be appreciated that the selection of the antenna configuration via the smart antenna manager may be specific for the current wireless connection protocol, such that a specific configuration is determined for a cellular connection or for a satellite connection. Thus, one of the MNO spectrum estimate 704 and the SNO spectrum estimate 706 may be entered as input to the deterministic model 701 and/or neural network model 703. In some examples, a respective expected beam direction may be determined for each of a cellular connection and a satellite connection and thus each of the MNO spectrum estimate 704 and the SNO spectrum estimate 706 may be entered as input in separate iterations.

The set of inputs 702 further includes current signal quality parameters that indicate the signal strength and quality of each of one or more wireless channels (e.g., cellular signals), which may include reference signal received power (RSRP ($\gamma1$)), reference signal received quality (RSRQ ($\gamma2$)), and other parameters including but not limited to received signal strength indicator (RSSI ($\gamma m$)). RSRP may indicate the strength of specific cellular signals (e.g., LTE and 5G) excluding noise and interference, RSRQ may indicate cellular signal quality (e.g., indicating the level of interference relative to desired signal strength), and RSSI may indicate the total received power within the bandwidth of the wireless channel.

The set of inputs 702 further includes current car/vehicle parameters that may impact signal quality/connectivity, which may include driving direction ($\varepsilon1$), location ($\varepsilon2$), and other parameters including but not limited to terrain ($\varepsilon p$). Additionally, the set of inputs 702 includes detected objects that may impact signal quality/connectivity detected via sensors of the vehicle, which may include a first estimated object ($\delta1$), a second estimated object ($\delta2$), and other objects up to a final estimated object ($\delta p$). Each estimated object may be defined by object type or size (e.g., tree, building) and relative location of the object (e.g., relative to the vehicle). It is to be appreciated that in some scenarios, no objects may be detected that may impact signal quality, or only one or two objects may be detected. Finally, the set of inputs 702 may include a mobile base station relay points map ($\rho$).

The set of inputs 702 may be processed by the smart antenna manager 602 to determine an expected beam direction. The expected beam direction may be a prediction of the directionality of the incoming wireless signal that is the most optimal for the current conditions. The expected beam direction may be indicated in the x,y direction (e.g., azimuth x and elevation y) relative to a fixed reference point of the vehicle.

The expected beam direction may be output based on the set of inputs 702 using the deterministic model 701 and/or the neural network model 703. The deterministic model 701 may be a rules-based model that may output the expected beam direction assuming all input variables are known with certainty (e.g., without randomness) and relationships among the input variables are fixed. In an example, the deterministic model may generate the expected beam direction based on the following equation:

$$\left( \sum (\alpha,\overline{\alpha}) \ OR \ \sum (\beta,\overline{\beta}) \right) + \sum_{i=1}^{m} fi(\gamma i) + \sum_{i=m+1}^{m+p} fi(\varepsilon i) + \sum_{i=m+p+1}^{m+p+q} fi(\delta i)$$

Thus, using the deterministic model 701, the expected beam direction may be a function of either the MNO spectrum estimate or the SNO spectrum estimate, each signal quality parameter (e.g., a summation of a function of each signal quality parameter), each current vehicle parameter (e.g., a summation of a function of each current vehicle parameter), and each detected object (e.g., a summation of a function of each detected object). While not shown, in some examples the deterministic model 701 may also determine the expected beam direction as a function of the mobile base station relay map. In some examples, a respective expected beam direction may be determined for each wireless protocol (e.g., TN/cellular and NTN/satellite). The deterministic model 701 may process the various input parameters through mathematical formulations that may include weighted summation, trigonometric functions, and coordinate transformation operations to determine the azimuth and elevation coordinates for beam direction.

The neural network model 703 may be trained to process the set of inputs 702 in order to output the expected beam direction. Thus, using the neural network model 703, the expected beam direction may be a function of either the MNO spectrum estimate or the SNO spectrum estimate, each signal quality parameter, each current vehicle parameter, each detected object, and the mobile base station relay points map. In some examples, the neural network model 703 may output a respective expected direction for each wireless protocol (e.g., TN/cellular and NTN/satellite). In some examples, the neural network model 703 may be configured to output a confidence level for each output expected beam direction. The neural network model 703 may be trained using a plurality of sets of training inputs of historical/previously collected inputs matching the set of inputs 702 (e.g., historical MNO/SNO spectrum estimates, historical signal quality parameters, historical vehicle parameters, historical object detection, historical mobile base station relay points maps) for a plurality of vehicles, in a plurality of situations, where a respective set of training inputs is collected from one vehicle at a given point in time. For training, the ground truth may include corresponding measured signal strength for each antenna of each vehicle at each point in time the set of training inputs was collected, where each antenna is defined by its directionality and matched to wireless network protocol. The measured signal strengths may be used to determine a ground truth beam direction.

As explained previously, the phase/gain control and/or antenna selection or switch may be used, based on the expected beam direction, to select the antenna(s) or the phase/gain of the antenna elements in order to match the antenna radiation pattern to the expected beam direction. The smart antenna manager 602 may include a selector that receives, as input, each expected beam direction and determines the selected antenna(s) or the phase/gain of the antenna elements based on each expected beam direction and, when available, a confidence level of each expected beam direction. For example, the selector may receive a first expected beam direction determined with the deterministic model 701 based on the MNO spectrum estimate 704 (in addition to the other inputs of the set of inputs 702) and a second expected beam direction determined with the deterministic model 701 based on the SNO spectrum estimate 706 (in addition to the other inputs of the set of inputs 702). Additionally or alternatively, the selector may receive a third expected beam direction determined with the neural network model 703 based on the MNO spectrum estimate 704 (in addition to the other inputs of the set of inputs 702) and a fourth expected beam direction determined with the neural network model 703 based on the SNO spectrum estimate 706 (in addition to the other inputs of the set of inputs 702). The selector may choose a specific antenna configuration based on the received expected beam directions, which may include switching antennas or antenna directionality within the same network (e.g., cellular) or switching to a different network (e.g., from cellular to satellite or vice versa).

In addition to the expected beam direction(s), the selector may utilize further information when choosing the specific antenna configuration. In particular, when multiple expected beam directions are received, the selector may choose the specific antenna configuration based on the confidence level of each expected beam direction (e.g., choosing the specific antenna configuration based on the expected beam direction with the highest confidence level). Additionally or alternatively, the selector may choose the specific antenna configuration based on a predefined mapping between expected beam direction(s) and antenna configurations. Additionally or alternatively, the selector may take into account upcoming conditions (e.g., an upcoming change in vehicle trajectory, an upcoming change in objects in the vicinity of the vehicle, an upcoming change in data/call status, etc., as determined from navigation data, user history, weather information, and so forth) when choosing the specific antenna configuration. For example, if the expected beam direction output by the deterministic model 701 differs from the expected beam direction output by the neural network model 703 by more than a threshold amount, the upcoming conditions may be taken into account in order to choose the specific antenna configuration that may be expected to be stable even as the upcoming conditions change. In still further examples, the selector may follow predefined rules for choosing the specific antenna configuration when the expected beam directions differ (e.g., are in conflict), wherein the predefined rules may be based on current and/or upcoming conditions. For example, the predefined rules may dictate that TNs be used if the upcoming conditions indicate the vehicle is about ready to drive through a thunder storm. In some examples, the predefined rules may take into account the MNO spectrum estimate 704, the SNO spectrum estimate 706, and the current signal quality parameters when choosing whether to switch networks. For example, if the current signal quality parameters for a TN connection are low and the SNO spectrum estimate 706 is higher/stronger than the MNO spectrum estimate 704, the predefined rules may indicate that a switch from TN to NTN is to be performed.

In some examples, the smart antenna manager 602 may utilize trajectory, location, and topography information (such as the set of inputs 702) along with data/call status and user profiles to determine optimal timing for switching between terrestrial networks (TN) and non-terrestrial networks (NTN). The system may pre-emptively switch from TN to NTN during periods of low communication activity, delay switching during active calls or selected navigation sessions, and provide user alerts when network transitions are recommended.

Thus, in some examples, the smart antenna manager 602 may utilize data/call status and user profile data 705 to identify the ideal time to switch from a TN to a NTN (or from NTN to TN) during ongoing communication. For example, using the expected beam directions (e.g., a first expected beam direction for TN and a second expected beam direction for an NTN) and the data/call status and user profile data 705, the smart antenna manager 602 may preemptively switch from TN to NTN when no significant communication (e.g., a phone call) is in progress with a driver profile setting or a prompt. Further, when making the switch from NTN back to TN, the smart antenna manager 602 may check the data/call status and user profile data 705 to determine what communication is in progress, and if the communication is significant (e.g., phone call, navigation), the break-before-make may be delayed to allow for extended productivity or enable a cushion to avoid dropping during the significant communication. As another example, if a phone call is in progress, and if the smart antenna manager 602 determined that it is better to go from TN to NTN (or from NTN to TN), based on current conditions and historical data, the smart antenna manager 602 may enable the handover/network switch only if the handover is allowed by the networks and/or the smart antenna manager 602 may alert the user (e.g., driver) that a transfer to or from NTN is advised (in which case the user may enter an input to instruct the handover, if desired).

For narrow-band NTN (NB-NTN) operating in FR1 frequencies, the smart antenna manager 602 controls antenna switching between different antennas in the plurality of antennas. For wideband NTN (WB-NTN) operating in FR2/3 frequencies, the smart antenna manager 602 determines beam direction parameters that are provided to phase and gain control systems for configuring phased array antenna elements. NB-NTNs use the same FR1 frequencies as TNs. For FR1, the antenna switching between the different antennas may be controlled by the smart antenna manager 602 which will cause the antenna selection/switch block to do the actual antenna switching, as explained above with respect to FIG. 4. WB-NTNs use FR2/3 frequencies which utilize phased array antennas. In such examples, the smart antenna manager 602 will send the beam direction to the phase and gain control block which will configure the gains and phases of the different elements of the phased array antenna, as explained above with respect to FIG. 5.

In some examples, the mobile base station relay points map ($\rho$) is dynamically maintained through real-time updates from network operator feeds, crowdsourced data from other vehicles, and periodic scanning of available relay infrastructure. The smart antenna manager 602 may evaluate relay point utilization by calculating a composite quality score based on signal strength (e.g., RSRP threshold values), latency requirements for different application types, and historical reliability metrics, for example. When multiple relay points are available, the deterministic model may apply weighted scoring where current signal quality receives a first weight, historical performance data receives a second weight, predicted trajectory alignment receives a third weight, and user profile preferences receive a fourth weight. In some examples, the first weight may be higher than the second, third, and fourth weights to prioritize real-time conditions over historical data. The mathematical formulation may combine these inputs as: Score = W1×(Signal_Quality_normalized) + W2×(Historical_Reliability) + W3×(Trajectory_Match) + W4×(User_Preference), where W1, W2, W3, and W4 represent the respective weights and values are normalized to a predetermined scale. In one specific example, W1 may be 0.4, W2 may be 0.3, W3 may be 0.2, and W4 may be 0.1, with normalization to a 0-1 scale, though other weights and scales are possible. Antenna switching decisions may be triggered when the score differential between current and alternative antennas exceeds a hysteresis threshold to prevent oscillation between antennas, such as a threshold of 0.15 in some implementations.

The neural network implementation may utilize various architectures including feedforward, recurrent, or convolutional neural networks. In one embodiment, the neural network model comprises a multi-layer feedforward architecture with an input layer having a first number of nodes corresponding to preprocessed sensor inputs, one or more hidden layers each having a second number of nodes with selected activation functions, and an output layer having a third number of nodes representing coordinate parameters. Input preprocessing may include normalization of signal quality values to a predetermined range, encoding of categorical variables, and temporal analysis of measurement samples over a selected time window. In a specific implementation, the network may include 64 input nodes, two hidden layers of 32 and 16 nodes respectively using ReLU activation functions, and 2 output nodes representing azimuth and elevation coordinates. The network outputs may be converted to beam coordinates using trigonometric functions, such as: Azimuth = arctan2(output_1, output_2) × conversion_factor, Elevation = arcsin(output_2) × conversion_factor, where the conversion_factor may be 180/$\pi$ for degree conversion, with coordinates referenced to a selected vehicle reference frame. Training may employ various learning methodologies including supervised learning, reinforcement learning, or federated learning approaches, and the model may be updated through continuous learning mechanisms when connectivity permits.

The smart antenna manager 602 may interface with vehicle systems through standardized communication protocols, which may include CAN bus protocols, Ethernet, or other suitable vehicle communication standards. In some embodiments, CAN 2.0B frames may be utilized at selected data rates for real-time data exchange, with antenna switching commands prioritized using predetermined message ID ranges. Processing latency constraints may mandate antenna selection decisions within a specified time threshold of trigger events, achieved through dedicated processing resources and optimization techniques such as pre-computed lookup tables for common scenarios. For phased array antennas operating at selected frequency ranges, phase control calculations may utilize mathematical formulations based on wavelength, element spacing, desired beam angle, and element positioning. In one example, the phase calculation may follow: Phase_n = (2$\pi$/$\lambda$) × d × sin($\theta$) × (n-1), where $\lambda$ represents wavelength, d represents element spacing (which may be $\lambda$/2), $\theta$ represents desired beam angle, and n represents element number. System robustness may include various fallback mechanisms where sensor degradation triggers automatic switching to backup configurations, and performance validation may employ continuous monitoring of key performance indicators including handover success rate (which may target values above a first threshold such as 95%), beam pointing accuracy (which may maintain tolerance within a second threshold such as ±2°), and connection establishment time (which may target values below third and fourth thresholds such as 3 seconds for NTN and 1 second for terrestrial networks respectively).

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the telematics unit 30 described with reference to FIG. 1. The methods may be performed by executing stored instructions with one or more logic devices (e.g., processors) in combination with one or more additional hardware elements, such as storage devices, memory, hardware network interfaces/antennas, switches, actuators, clock circuits, etc. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and subcombinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The following claims particularly point out subject matter from the above disclosure that is regarded as novel and non-obvious.

**Claims**

1. A telematics system for a vehicle, the telematics system comprising:

   a plurality of antennas capable of sending and receiving wireless signals;
   a telematics unit configured to select an antenna from the plurality of antennas based on network information and dynamic vehicle information and connect the selected antenna to the telematics unit to send and/or receive wireless signals via the selected antenna.

2. The telematics system of claim 1, wherein the network information includes static and/or historical information about a mobile network and/or a satellite network to which the vehicle is configured to connect.

3. The telematics system of claim 1 or 2, wherein the dynamic vehicle information includes current wireless signal quality, vehicle driving direction, vehicle route, current vehicle location, information indicating nearby terrain, and/or sensor output.

4. The telematics system of claim 3, wherein the sensor output comprises camera data, radar data, and/or lidar data.

5. The telematics system of any preceding claim, wherein the plurality of antennas includes a first subset of antennas and a second subset of antennas.

6. The telematics system of claim 5, wherein the telematics unit includes an antenna controller including a first switch and a second switch, the first switch configured to connect the telematics unit to a selected one of the first subset of switches and the second switch configured to connect the telematics unit to a selected one of the second subset of switches, such that the first switch or the second switch is actuated to connect the selected antenna to the telematics unit.

7. The telematics system of any preceding claim, wherein at least a portion of the plurality of antennas have radiation patterns optimized for different fixed directions.

8. The telematics system of any preceding claim, wherein the telematics unit includes a smart antenna manager configured to process the network information and the dynamic vehicle information using a deterministic model or a neural network-based model to determine one or more antenna selection parameters, and wherein the telematics unit is configured to select the antenna based on the one or more antenna selection parameters, and preferably .
   the one or more antenna selection parameters include beam direction coordinates comprising azimuth and elevation values.

9. A method for a telematics system for a vehicle, the method comprising:

obtaining network information and dynamic vehicle information relating to a current and/or predicted signal quality of wireless signals sent from and/or received at the vehicle;

determining a shape of a radiation pattern for a plurality of antennas of the vehicle based on the network information and the dynamic vehicle information; and

shaping the radiation pattern of the plurality of antennas according to the determined shape.

10. The method of claim 9, wherein shaping the radiation pattern comprises selecting an antenna from a plurality of antennas of the vehicle based on the network information and the dynamic vehicle information and sending and/or receiving wireless signals via the selected antenna.

11. The method of claim 9 or 10, wherein the plurality of antennas includes a phased array antenna comprising an array of antenna elements, and wherein shaping the radiation pattern comprises adjusting a phase and/or gain of each RF signal output by each antenna element of the phased array antenna.

12. The method of any of claims 9 to 11, wherein determining the shape of the radiation pattern for the plurality of antennas of the vehicle based on the network information and the dynamic vehicle information comprises determining the shape of the radiation pattern based on an expected beam direction determined based on the network information and the dynamic vehicle information, such that the shape of the radiation pattern matches the expected beam direction.

13. The method of claim 12, wherein the expected beam direction is determined from the network information and the dynamic vehicle information using a deterministic model or a neural network model.

14. A method for antenna control in a vehicle telematics system of a vehicle, the method comprising:

obtaining network information including base station maps and satellite constellation data;

obtaining dynamic vehicle information including current signal quality and vehicle parameters;

processing the network information and dynamic vehicle information using a smart antenna manager to determine a selected antenna configuration; and

controlling antenna selection or beam direction of one or more antennas of the vehicle based on the selected antenna configuration.

15. The method of claim 14, wherein processing the network information and dynamic vehicle information comprises at least one of the following:

- processing the network information and the dynamic vehicle information with a deterministic model that applies weighted scoring to combine the network information and the dynamic vehicle information,

- processing the network information and the dynamic vehicle information with a neural network with multiple layers to determine beam direction coordinates.

**FIG. 1**

FIG. 2

EP 4 742 552 A2

FIG. 3

**FIG. 4**

FIG. 5

600

604

602

| MNO BS Map & Coverage Map & Spectrum/Band Map |
| --- |

| SNO Const. Map & Coverage Map & Spectrum/ Band Map |
| --- |

| Network coverage prediction (based on historical data) |
| --- |

| Current signal quality (RSRP, RSRQ, RSSI, etc.) + AoA of available signal |
| --- |

| Car Info (Driving Direction, Route, Current Location/ Nearby Terrain, etc.) |
| --- |

| Sensor Detection for Building, Tree, etc. |
| --- |

| Any relay point (Mobile BS, Other protocol, etc.) |
| --- |

| Smart Antenna Manager (Deterministic- or neural network- based) |
| --- |

| Phase Control & Gain Control |
| --- |

| Antenna Selection and/or Switch |
| --- |

# FIG. 6

**FIG. 7**